# EUROPEAN PATENT APPLICATION

(11) **EP 3 603 861 A1**
(43) Veröffentlichungstag der Anmeldung: **05.02.2020**
(21) Anmeldenummer: 18775524.4
(22) Anmeldetag: 05.03.2018
(51) Int. Cl.: B23C 3/00

(54) **AUTOMATISCHE DOPPELKOPF-PFOSTENFRÄSMASCHINE**

(30) Priorität: 30.03.2017 RU 2017110692
(71) Anmelder: Vstovskii, Vladimir Nikitich, St.Petersburg 196191 (RU)
(72) Erfinder: Vstovskii, Vladimir Nikitich, St.Petersburg 196191 (RU)
(74) Vertreter: Jeck, Anton
(86) Internationale Anmeldenummer: PCT/RU2018/000129
(87) Internationale Veröffentlichungsnummer: WO 2018/182455

(57) **Zusammenfassung**

Die vorliegende Erfindung betrifft die Herstellung von Kunststofffenstern und -türen und kann zum Fräsen von Kämpfern nach ihrer Kerbung vor der Montage der mechanischen Anschlussteile an Stirnflächen des Kämpfers verwendet werden. Die automatische doppelköpfige Kämpfer-Fräsmaschine hat ein Gestell, eine feste Fräsplatte, eine bewegliche Fräsplatte mit eingebauten Elektromotoren und Fräsern, ein Bedienungspult, einen Schrittmotor, einen Riemenantrieb, Rohransätze zum Einbauen der Staubabsaugung und eine automatisch zentrierte Unterstützung der Kämpfer in Form von an der Welle des Schrittmotors befestigten Seilscheiben und eines Riemens. Die Fräsmaschiene ist mit einem System der Linearverschiebung ausgerüstet, in dem mittels Gleitschlitten die bewegliche Fräsplatte und der Tragarm am Bedienungspult befestigt sind. Die feste Fräsplatte ist am Gestell fest montiert. Der Tragarm mit dem Bedienungspult ist zwischen der beweglichen und festen Fräsplatte montiert. Der Schrittmotor und der Riemenantrieb sind mit der Möglichkeit der Inbetriebsetzung der beweglichen Platte und des Bedienungspults montiert. Die Geometrie des Kämpfers wird nach der Bearbeitung verbessert, Mängel bei seiner Montage werden reduziert, und die Produktionseffizienz wird gesteigert.

## Beschreibung

Die vorliegende Erfindung betrifft die Produktion (Montage) von Kunststofffenstern und -türen, insbesondere dient sie zur Ausführung von Fräsarbeiten an den Stirnflächen des Kämpfers, die nach der Kerbung des Kämpfers und vor der Montage der Anschlussteile an den Stirnflächen des Kämpfers ausgeführt werden.

Analog zur vorliegenden Erfindung ist eine hochleistungsfähige zweiköpfige Fräsmaschine für die Stirnfläche eines Kämpfers mit der Bezeichnung "Murat FA 526" bekannt, die für die simultane Bearbeitung zweier Stirnflächen des Kämpfers aus PVC und Aluminium unter verschiedenen Winkeln bestimmt ist. Dadurch ist es möglich, nicht nur geradwinklige, sondern auch kundenspezifische Konstruktionen herzustellen. Die Fräsmaschine ermöglicht, zwei Fräsen zu montieren. Dadurch können die Kämpfer von zwei Profilsystemen bearbeitet werden, indem die eine oder andere Fräse durch einen Schalter zugefügt wird. Die Zufügung der Fräse erfolgt durch einen Pneumatikzylinder, und die Geschwindigkeit der Zufügung der Fräse ist regelbar. Die Befestigung des Werkstücks erfolgt durch Druckluftanpressvorrichtungen. Die Breite des zu bearbeitenden Profils kann bis zu 120 mm und die Höhe des Profils bis zu 90 mm betragen (vgl. Internet-Link: http://omtec.ru/obomdovaniemurat/obomdovanie-dlya-sborki-okon-2/215-fa-526, veröffentlicht am: 27.01.2015).

Der Prototyp zur vorliegenden Erfindung ist eine Fräsmaschine für stirnseitige Profilenden, die mit den Seiten anderer Profile verbunden werden, um den Multiplikator des segmentierten Fensterrahmens auszubilden.

Die Hauptaufgabe der vorliegenden Erfindung besteht in Folgendem:
- Sie soll ein automatisches Fräsen gleichzeitig an beiden Enden gewährleisten.
- Sie umfasst ein schnelles und leicht ersetzbares Klingensystem, so dass mehrere Profilarten bearbeitet werden können, ohne dabei Zeit für ein Austauschen der Schneidmesser bei jedem Austauschen der Profile zu verlieren.
- Sie umfasst ein drehbares Regelventil, damit die Einstellungen zu vier verschiedenen Profilarten gleichzeitig erfolgen können.
- Eine Steuerung der Fräsgeschwindigkeit befindet sich auf einem Bedienungspult zur Anwendungsfreundlichkeit.
- Sie gewährleistet die Möglichkeit, an den verschiedenen Winkelprofilen zu arbeiten.
- Ein pneumatisches Spannsystem soll verwendet werden können.
- Eine verstärkte Motorwelle soll verwendet werden können.
- Eine Sonderfunktion zur Vermeidung des Profilgleitens soll erfüllt werden können.
- Eine Vorrichtung zur seitlichen Positionierung der Profile soll verwendet werden können.
- Die Lage des Befestigungsprofils mit einem speziellen Einzug in der Baugruppe der Positionierung des Seitenprofils soll eingestellt werden können.
- Ein Tragarm zur Unterstützung langer Profile soll verwendet werden können.
- 2 Klingen sollen vorgesehen werden.
- Alle Sicherheitsmaßnahmen zur Vorbeugung von Betriebsunfällen sollen vorgesehen werden.
- Die vorgesehene Speiseeinheit soll gegen Spannungsüberlastung geschützt sein (vgl. Internet-Links: https://www.youtube.com/watch?v=_f2nqxr fqY und http://www.ozgencmac ne.com/omrm-121d--automatic-pyc-proflle- doubleend-milling-machine, veröffentlicht am: 06.05.2014).

Zu den Nachteilen des Analogons und des Prototyps gehören: Ein zweiter Kopf der Maschine verschiebt sich nicht automatisch (kein Antrieb), somit führt ein manuelles "Anpressen" des Werkstücks zur Krümmung des Fräsens im Winkel und nach der Größe. Als Basis der Aufnahme der Kämpfer-Werkstücke in die Maschine wird die breite Seite benutzt. Demzufolge stimmen die Stabschlitze des Kämpfers und des Rahmens/Flügels nicht überein, da bei der Herstellung des Kämpfers und des Rahmens/Flügels verschiedene Ziehdüsen verwendet werden, die sich nach ihrer Geometrie unterscheiden. Eine Veränderung der Geometrie der Kämpfer führt sogar im Sinne von GOST zur Verschiebung der Stäbe im Punkt der Verbindung des Kämpfers und des Rahmens oder Flügels an der Innenseite des PVC-Fensters.

Das technische Ergebnis der vorliegenden Erfindung ist die Steigerung der Wirksamkeit des Fertigungsprozesses und als Folge davon die Senkung von Mängeln der hergestellten Produkte, der mit der Geometrie des zu montierenden Kämpfers verbunden ist.

Das erreichte technische Ergebnis wird in der automatischen zweiköpfigen Kämpfer-Fräsmaschine dadurch umgesetzt, dass die Maschine aus einem Gestell besteht, auf dem angeordnet sind: eine feste Fräsplatte, eine bewegliche Fräsplatte, ein Bedienungspult, ein Schrittmotor, ein Riemenantrieb, Rohransätze zum Einbauen der Staubabsaugung und eine automatisch zentrierte Unterstützung des Kämpfers. Die feste Platte ist dabei am Gestell fest angebaut. Die bewegliche Platte ist am System der Linearverschiebung angebaut und ist mit Gleitschlitten befestigt. Zwischen der beweglichen und der festen Platte sind ein Tragarm und das Bedienungspult angebaut. Das Bedienungspult ist auch beweglich und ist zum System der Linearverschiebung mit den Schlitten befestigt. Die bewegliche Platte und das Bedienungspult werden mit dem Schrittmotor und einem Riemenantrieb betrieben. Die bewegliche Platte und der Tragarm mit dem Bedienungspult sind am Riemen mit den Tragarmen befestigt, und an der Welle des Schrittmotors sind Seilscheiben und der Riemen befestigt.

Das System der Linearverschiebung besteht dabei aus Rundschienen mit Lagern.

Alle gleichartigen Anlagen fräsen heute den Kämpfer nach der geschnittenen Größe des Werkstücks, und wenn die Länge des geschnittenen Werkstücks falsch ist, wird der Kämpfer falsch gefräst. Ist das Werkstück im angegebenen Analogon nicht größengemäß geschnitten, so wird die notwendige Größe gefräst (die Länge wird durch Fräsen angepasst). Wenn das Werkstück von der notwendigen Größe wesentlich abweicht, wird es nicht gefräst, und die Fräsmaschine gibt ein entsprechendes Signal ab.

Die zur Patentierung angebotene technische Lösung wird nun mit Hilfe von Zeichnungen erläutert. Es ist Folgendes dargestellt:

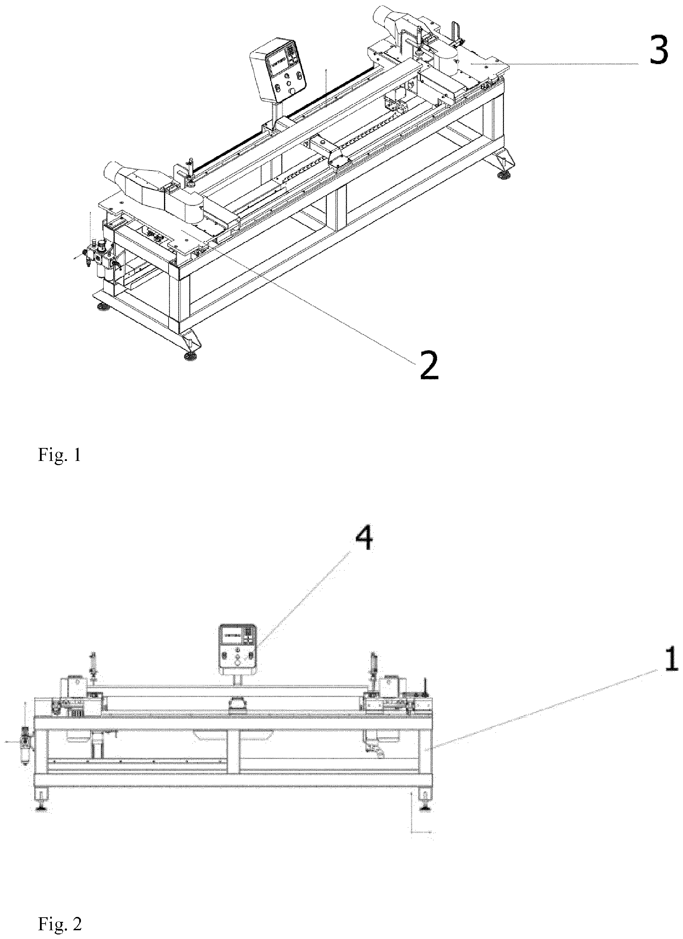

- Fig.1: eine Hauptansicht der Vorrichtung in Ansicht ³L,
- Fig. 2: eine Frontansicht der Vorrichtung,

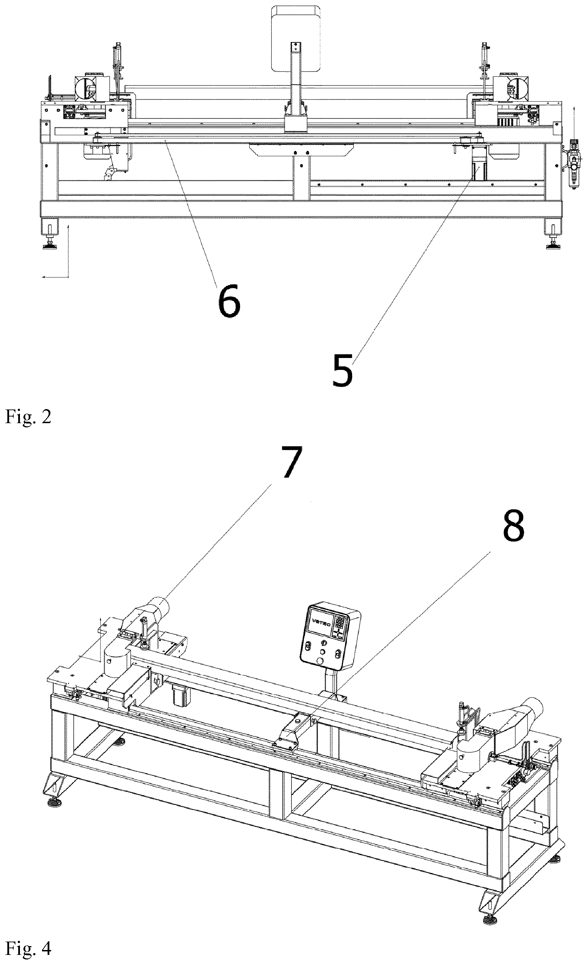

- Fig. 3: eine Rückansicht der Vorrichtung und
- Fig. 4: eine Frontansicht der Vorrichtung in Ansicht 3/4.

Dabei ist:
1 Gestell,
2 feste Fräsplatte,
3 bewegliche Fräsplatte,
4 Bedienungspult,
5 Schrittmotor,
6 Riemenantrieb,
7 Rohransätze zum Einbauen der Staubabsaugung (Spanabsaugung),
8 automatisch zentrierte Unterstützung des Kämpfers. (der Tragarm),

Am Maschinengestell 1 sind folgende Elemente 2 - 8 angeordnet: Die feste Platte 2 ist links angeordnet und fest am Gestell 1 angebaut (Befestigung z. B. mit Schrauben). Die bewegliche Platte 3 ist am System der Linearverschiebung, z. B. Rundschienen mit Lagern, angebaut und wird durch mindestens vier Gleitschlitten befestigt. Zwischen der beweglichen und der festen Platte sind der Tragarm 8 und das Bedienungspult 4 angebaut. Das Bedienungspult 4 ist auch beweglich und ist am System der Lienearverschiebung durch mindestens zwei Schlitten befestigt. Die beweglichen Elemente 3, 4 werden durch den Schrittmotor 5 und den Riemenantrieb 6 betrieben. Die bewegliche Platte und der Tragarm mit dem Bedienungspult sind am Riemen mit Tragarmen befestigt. An der Welle des Schrittmotors sind mindestens zwei Seilscheiben und zwei Riemen befestigt. Dadurch wird eine Zentrierung des Tragarms (8) mit dem Bedienungspult erreicht, der zur Unterstützung (Schutz gegen Durchhängung) beim Fräsen langer Kämpferwerkstücke dient.

### Durchführung der Vorrichtung

Zu Beginn der Arbeit mit dem Bedienungspult wird ein Befehl an einen Kontroller gegeben, der diesen Befehl an den Schrittmotor mit der Anzahl der Schritte richtet, die die bewegliche Platte 3 für das Fräsen der laufenden Größe des Werkstücks braucht. Nachdem das Werkstück eingestellt und die Taste betätigt wird, kommt der Befehl an den Kontroller, dass das Fräsen begonnen werden kann. Die bewegliche Platte 3 wird gepresst, und das Werkstück wird durch Druckluftanpressvorrichtungen für seine Befestigung während des Fräsens gepresst. Es werden die Elektromotoren gestartet. An den Wellen der Elektromotoren sind die Fräser zum Fräsen des Kämpfers eingestellt. Druckluftzylinder, die an den Lamellen mit den Elektromotoren innerhalb beider Platten 2, 3 befestigt sind, beginnen auszufahren, womit gleichzeitig eine Linearbewegung der Fräser entlang der Fräsachse rechtwinklig zum eingestellten Werkstück erfolgt. Nach der Beendigung des Fräsens fahren die Druckluftzylinder ein. Die Fräser und die Elektromotoren gehen dabei in die Startposition zurück. Die Anpressvorrichtungen werden freigelassen, und die bewegliche Platte 3 fährt zurück, um den Zugang zum gefrästen Werkstück zu gewährleisten. Die bewegliche Platte wird zusammen mit dem Elektromotor und dem Fräser mit der Genauigkeit bis zu 0,1 mm unabhängig von der Länge des Werkstücks automatisch positioniert, und es wird genau die Größe gefräst, die programmgesteuert oder manuell am Bedienungspult eingegeben wurde. Somit werden Fehler beim Aufschneiden der Werkstücke der Kämpfer behoben. Der Mittelträger mit dem Pult schützt gegen Durchhängung langer Werkstücke des Kämpfers.

Die Ummantelungen an den beiden Platten haben Ausgänge für den Anschluss der Staubabsaugung.

Somit hat die Prüfung des Prüfungsmodells den Einfluss der Gesamtheit der wesentlichen Merkmale der Vorrichtung auf das erreichte technische Ergebnis bestätigt, und zwar eine Steigerung der Wirksamkeit des Fertigungsprozesses und als Folge die Senkung des Mangels der hergestellten Produkte, die mit der Geometrie des zu montierenden Kämpfers verbunden ist.

Die vorliegende Erfindung ist neu, da die Gesamtheit der wesentlichen Merkmale aus dem Stand der Technik nicht bekannt ist.

Die Erfindung ist gewerblich im ausgewählten Bereich der Technik benutzbar.

## Patentansprüche

1. Automatische doppelköpfige Kämpfer-Fräsmaschine, bestehend aus einem Gestell, einer festen Fräsplatte, einer beweglichen Fräsplatte mit einem angebauten Elektromotor und Fräsern, einem Bedienungspult, einem Schrittmotor, einem Riemenantrieb, Rohransätzen zum Einbauen der Staubabsaugung und einer automatisch zentrierten Unterstützung des Kämpfers,
**dadurch gekennzeichnet,**
**dass** sie mit einem System der Linearverschiebung ausgerüstet ist, mittels dem mit Gleitschlitten die bewegliche Fräsplatte und der Tragarm am Bedienungspult befestigt sind,
**dass** die feste Fräsplatte dabei am Gestell fest montiert ist,
**dass** der Tragarm mit dem Bedienungspult zwischen der beweglichen und der festen Fräsplatte montiert ist,
**dass** der Schrittmotor und der Riemenantrieb mit der Möglichkeit der Inbetriebsetzung der beweglichen Platte und des Bedienungspultes montiert sind, und dass eine automatische Unterstützung des Kämpfers dabei in Form von an der Welle des Schrittmotors befestigten Seilscheiben und eines Riemens ausgeführt ist.

2. Automatische doppelköpfige Kämpfer-Fräsmaschine nach Anspruch 1,
**dadurch gekennzeichnet,**
**dass** das System der Linearverschiebung in Form von Rundschienen mit Lagern ausgeführt ist.
